# EUROPÄISCHE PATENTSCHRIFT

(11) **EP 1 388 690 B1**
(45) Veröffentlichungstag und Bekanntmachung des Hinweises auf die Patenterteilung: **13.07.2011**
(21) Anmeldenummer: 03018066.5
(22) Anmeldetag: 08.08.2003
(51) Int. Cl.: F16H 63/20, F16H 63/30

(54) **Schaltvorrichtung**
Shift device
Dispositif de changement de vitesse

(30) Priorität: 09.08.2002 DE 10236594
(43) Veröffentlichungstag der Anmeldung: 11.02.2004
(73) Patentinhaber: GETRAG Getriebe- und Zahnradfabrik Hermann Hagenmeyer GmbH & Cie KG, 74199 Untergruppenbach (DE)
(72) Erfinder: Schöberl, Helmut, 85098 Grossmehring (DE); Kaindl, Achim, 71543 Wüstenrot (DE)
(74) Vertreter: Steil, Christian

(56) Entgegenhaltungen:
- EP-A1- 0 579 532
- FR-A- 1 476 760
- JP-A- 9 196 167
- JP-A- 59 108 124

## Beschreibung

Die Erfindung betrifft eine Schaltvorrichtung für eine Geschwindigkeits-Wechselgetriebe, insbesondere in Kraftfahrzeugen, gemäß dem Oberbegriff des Patentanspruches 1.

Geschwindigkeits-Wechselgetriebe, insbesondere in Kraftfahrzeugen, weisen zum geräuschlosen Wechseln der Gänge sogenannte Synchronkupplungen (z.B. Borg Warner Synchronisierung) auf, die den beim Schalten erforderlichen Gleichlauf zwischen den zu schaltenden Zahnrädern herstellen. Der Kraftfluss beim Schalten erfolgt dabei vom Schalthebel über ein Schaltgestänge auf eine Schaltgabel, die in direktem Eingriff mit einer Schaltmuffe an der Synchronkupplung steht. Obwohl derartige Synchronkupplungen sehr zuverlässig funktionieren, kann es bei ungünstigen Temperaturen, durch Trägheitseinflüsse und/oder bei nicht konsequenter Durchführung des Schaltvorganges zu einem "Kratzen" führen, das sich als unangenehm für die Bedienungsperson des Kraftfahrzeuges darstellt.

Aus der gattungsbildenden JP 09 196167 A ist eine Schaltbetätigungsvorrichtung eines Wechselgetriebes bekannt, bei dem ein elastisches Verbindungsmittel bereitgestellt ist zum verbinden einer Schaltgabel, die zum Halten einer Nabe dient, mit einer Schaltgabelschiene, die in axialer Richtung verschieblich gelagert ist, und die verbunden ist mit dem Schalthebel, mit einem Paar von elastischen Ringen, die koaxial zu der Schaltgabelschiene angeordnet sind, die aus einem Gummimaterial gebildet sind und die mit jeweils einem Endabschnitt in axialer Richtung verbindbar sind, und mit einem Paar Halteplatten, die verbunden sind mit der Schaltgabelschiene und die die elastischen Ringe in axialer Richtung halten.

Aufgabe der Erfindung ist es, eine Schaltvorrichtung der gattungsgemäßen Art vorzuschlagen, bei der auch bei ungünstigen Betriebsbedingungen oder bei nicht konsequentem Durchschalten Kratzgeräusche vermieden sind.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

In dem Betätigungsgestänge ist ein definiert begrenzter Leerweg vorgesehen, der mittels zumindest einer Feder überbrückt ist, wobei die Vorspannkraft der Feder kleiner als die auftretende Schaltkraft ist. Der Vorschlag zielt darauf ab, bei dem Schaltvorgang einen Kraftspeicher aufzubauen, der im Verlauf des Schaltens den Synchronisationsablauf in der Synchronkupplung optimiert bzw. eine zügige Durchschaltung beim Gangwechsel sicherstellt. Der einer Federvorspannung unterliegende Leerweg in dem Schaltgestänge bewirkt eine Vergleichmäßigung im Funktionsablauf, die beispielsweise dem Auftreten des sogenannten zweiten Druckpunktes beim Schalten entgegenwirkt.

Obwohl der besagte Leerweg an einer geeigneten Stelle im Kraftfluss zwischen dem Schalthebel und der Schaltgabel vorgesehen sein kann, wird zur Ausschaltung von Trägheitsmassen und/oder Reibungsverlusten etc. bevorzugt vorgeschlagen, den Leerweg und die Feder unmittelbar zwischen der Schaltgabel und dem diese beaufschlagenden Gestängeteil anzuordnen, in der Regel also zwischen der Schaltgabel und diese aufnehmenden Schaltschiene.

Ferner versteht sich, dass die Feder in jeder beliebigen Art und Weise als elastisches Element ausgebildet sein kann, also bspw. durch herkömmliche Federelemente, wie Schraubenfedern, Blattfedern, Tellerfedern, etc., aber bspw. auch durch Elastomerelemente etc.

Insgesamt ergibt sich erfindungsgemäß eine Komfortverbesserung, z.B. hinsichtlich des Hochschaltkratzens. Die Erfindung lässt sich in integrierter Bauweise realisieren. Auch hat sie zur Folge, dass sich der Verschleiß der Schaltverzahnung verringert.

Ferner ist die Schaltvorrichtung genauso mit einer Schaltschwinge statt einer Schaltgabel realisierbar. Sämtliche Bezugnahmen auf eine Schaltgabel sollen' sich daher vorliegend in gleichem Maße auch auf eine Schaltschwinge beziehen.

In baulich besonders einfacher Weise kann dabei der Leerweg durch ein Langloch in der Nabe der Schaltgabel gebildet sein und ferner ein Mitnehmerbolzen in der Schaltschiene in das Langloch einragen. Die Schaltgabel ist dann auf der Schaltschiene im Rahmen des vorgesehenen Leerweges frei verschiebbar, wobei jedoch dieser Leerweg durch die Federvorspannung zunächst überbrückt ist und erst beim Schaltvorgang zur Wirkung kommt.

Erfindungsgemäß ist die Feder eine um die Schaltschiene angeordnete Schraubendruckfeder, die an der Nabe der Schaltgabel einerseits und an einem an der Schaltschiene festgelegten Anschlagring andererseits abgestützt ist. Daraus resultiert eine räumlich gedrängte und einfache Konstruktion, die mit geringem Montageaufwand in das Wechselgetriebe integrierbar ist.

Zur Ausschaltung von Toleranzen und zur Einstellung einer definierten Vorspannung kann ferner der Anschlagring der Feder auf der Schaltschiene axial verstellbar sein, wobei in herstellungstechnisch einfacher Weise der Anschlagring als Gewindemutter auf einen Gewindeabschnitt auf der Schaltschiene aufschraubbar ist.

Des weiteren kann bei einer in beiden Richtungen aus der Neutralstellung verschiebbaren Schaltmuffe ein in beiden Richtungen wirksamer Leerweg vorgesehen sein, der mittels zweier Federn in eine definierte Mittelstellung überbrückbar ist, wobei die Vorspannkraft der Federn wiederum kleiner als die jeweilige Schaltkraft ist. Damit kann in baulich besonders einfacher Weise bei sogenannten Doppel-Synchronkupplungen, bei denen die Schaltmuffe aus einer Neutralstellung heraus in beiden axialen Richtungen zum Einschalten eines Ganges verschiebbar ist, in beiden Richtungen ein durch eine Federvorspannung überbrückbarer Leerweg geschaffen werden, der als Kraftspeicher den Schaltvorgang wie beschrieben optimiert.

ln baulich besonders einfacher Weise wird dazu vorgeschlagen, ein Langloch mit dem zweifachen Leerweg in der Nabe der Schaltgabel auszubilden, in das der Mitnehmerbolzen der Schaltschiene einragt, wobei beiderseits der Nabe je eine Schraubendruckfeder vorgesehen ist, welche Federn sich an je einem Anschlagring auf der Schaltschiene abstützen und die Schaltgabel bezüglich des Leerweges in eine mittlere Position desselben vorspannen.

Schließlich hat es sich als besonders wirkungsvoll herausgestellt, wenn der definierte Leerweg ca. 1/3 des jeweiligen Schaltweges der Schaltgabel beträgt und wenn die Vorspannkraft der Feder auf ca. 30% bis 70%, insbesondere ca. 50%, der regulären Schaltkraft eingestellt wird.

Gemäß einer weiteren bevorzugten Ausführungsform ist der Leerweg durch ein Langloch in der Schaltschiene gebildet, in das ein Mitnehmerbolzen der Schaltgabel hineinragt.

Bei dieser Ausführungsform ist demzufolge der Mitnehmerbolzen starr mit der Schaltgabel verbunden. Diese Ausführungsform stellt demzufolge eine kinematische Umkehr zu der Ausführungsform dar, bei der der Leerweg durch ein Langloch in der Nabe der Schaltgabel gebildet ist und ein Mitnehmerbolzen der Schaltschiene in das Langloch hineinragt.

Dabei ist es von besonderem Vorteil, wenn die Feder eine in einer Axialbohrung der Schaltschiene aufgenommene Feder ist, die sich einerseits an dem Mitnehmerbolzen und andererseits an einer Anschlaganordnung innerhalb der Axialbohrung abstützt.

Von besonderem Vorteil ist bei dieser Ausführungsform, dass sie deutlich schmutzunempfindlicher ist.

Ferner ist es bei dieser Ausführungsform bevorzugt, wenn die Anschlaganordnung ein Anschlagelement, das innerhalb der Axialbohrung axial festgelegt ist, und ggf. ein Verlängerungselement aufweist, das zwischen dem Anschlagelement und der Feder angeordnet ist.

Hierdurch kann eine an den Funktionszweck besser angepasste Feder integriert werden, da insbesondere die Baulänge der Feder nicht von ihrer axialen Lage an der Schaltschiene abhängt.

Gemäß einer weiteren bevorzugten Ausführungsform weist die Anschlaganordnung einen fest in der Axialbohrung verspannten Zylinderstift auf.

Statt eines Zylinderstiftes kann es sich auch um einen Spannstift handeln.

Gemäß einer alternativen Ausführungsform weist die Anschlaganordnung einen verstellbar in der Axialbohrung aufgenommenen Gewindestift auf.

Bei dieser Ausführungsform ist eine Ein- bzw. Nachjustierung der Federvorspannung einfacher zu realisieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: stark vereinfacht eine Seitenansicht einer erfindungsgemäßen Schaltvorrichtung für ein Geschwindigkeits-Wechselgetriebe für ein Kraftfahrzeug, mit einer Schaltgabel, einem Schaltgestänge und einem Schalthebel zum Betätigen einer nicht dargestellten Synchronkupplung des Wechselgetriebes;
- Fig. 2: einen Querschnitt gemäß Linie II-II der Fig. 4 durch die Schaltschiene und den Nabenabschnitt der Schaltgabel;
- Fig. 3: eine Längsschnitt gemäß der Linie III-III der Fig. 2;
- Fig. 4: eine stark vereinfachte Längsschnittansicht einer weiteren Ausführungsform einer erfindungsgemäßen Schaltvorrichtung;
- Fig. 5: eine Draufsicht auf die Schaltvorrichtung der Fig. 4; und
- Fig. 6: eine teilweise längsgeschnittene Seitenansicht einer weiteren Ausführungsform einer erfindungsgemäßen Schaltvorrichtung.

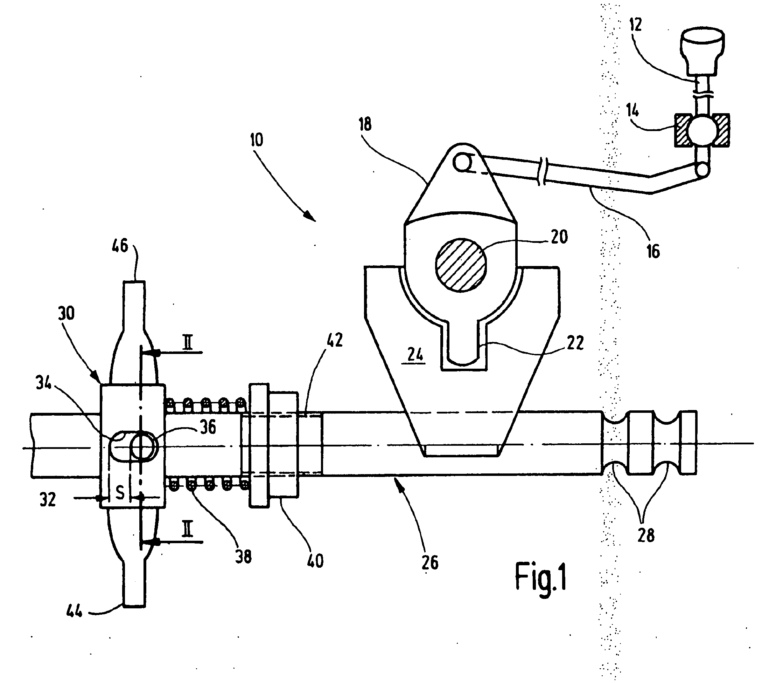

Die in Fig. 1 ersichtliche Schaltvorrichtung 10 setzt sich im wesentlichen zusammen aus einem manuell betätigbaren Schalthebel 12, der in einer fahrzeugfesten Konsole 14 schwenkbar gelagert ist. Über ein Gestänge 16, 18 ist der Schalthebel 12 mit einer in dem nicht dargestelltem Wechselgetriebe verschiebbar und drehbar geführten Schaltwelle 20 verbunden.

Die Schaltwelle 20 trägt einen Schaltfinger 22, der in ein Kulissenteil 24 eingreift, weiches auf einer Schaltschiene 26 befestigt ist. Die nur teilweise dargestellte Schaltschiene 26 ist ebenfalls in axialer Richtung im Gehäuse des Wechselgetriebes verschiebbar gelagert und trägt an ihrem einen Ende Rastierungen 28 für eine die Schaltschiene 26 im Gehäuse federnd fixierende Kugelraste (nicht dargestellt).

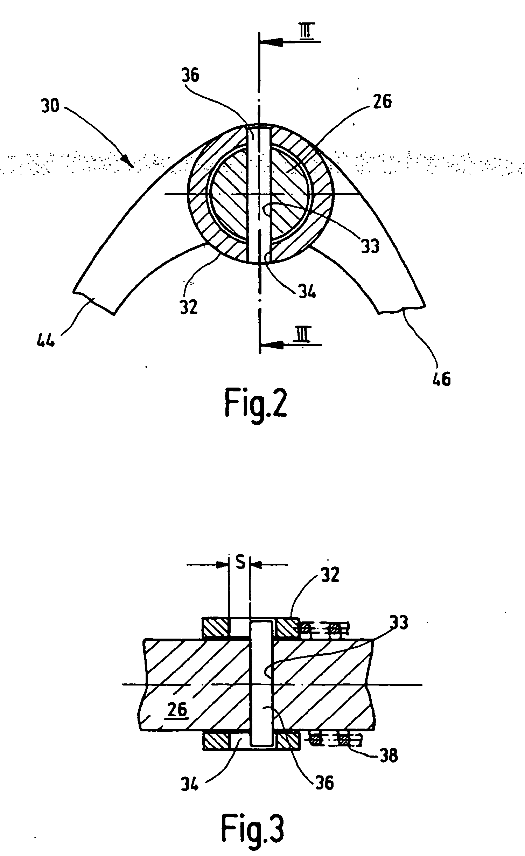

Die Schaltschiene 26 (vgl. auch Fig. 2 und 3) trägt ferner eine Schaltgabel 30, deren Nabenabschnitt 32 axial verschiebbar auf der in diesem Bereich rotationssymetrisch ausgebildeten Schaltschiene 26 geführt ist.

ln dem Nabenabschnitt 32 ist durchgehend ein Langloch 34 definierter Länge vorgesehen, das beiderseits von einem in der Schaltschiene 26 in einer entsprechenden Querbohrung 33 festgelegten Mitnehmerbolzen 36 unter Belassung eines definierten Leerweges s durchgriffen wird.

Auf den Nabenabschnitt 32 wirkt eine Schraubendruckfeder 38, die sich andererseits an einem eine Gewindemutter darstellendem Anschlagring 40 abstützt. Der Anschlagring 40 ist auf ein entsprechendes Außengewinde 42 der Schaltschiene 26 aufgeschraubt und definiert die Vorspannung der Schraubendruckfeder 38. Das Innengewinde des Anschlagringes 40 kann dabei selbstsichernd ausgeführt sein, oder es kann eine entsprechende Kontermutter verwendet sein.

Der Leerweg s des Langloches 34 beträgt ca. 1/3 des Schaltweges der Schaltschiene 26 beim Einiegen eines Ganges. Ferner ist die Schraubendruckfeder 38 so ausgeführt und mit dem Anschlagring 40 eingestellt, dass deren Vorspannkraft ca. 50% der regulären, mittleren, über den Schalthebel 12 aufgebrachten Schaltkraft entspricht. Ggf. sind empirische Versuche zur Einstellung der Vorspannkraft und des Leerweges s abhängig von den spezifischen Voraussetzungen des jeweiligen Wechselgetriebes vorteilhaft, um den besten Kompromiss zwischen Funktionalität und Schaltpräzision zu erreichen.

Die Schaltgabel 30 trägt in bekannter Weise Arme 44, 46, die eine nicht dargestellte Schaltmuffe einer Synchronkupplung z.B. nach dem Borg Warner System in axialer Richtung formschlüssig umfassen, so dass bei einem Verschieben der Schaltgabel 30 die Schaltmuffe entsprechend betätigt und die Synchronkupplung in bekannter Weise nach entsprechender Synchronisierung eventueller Drehzahlunterschiede geschlossen wird.

Die Synchronkupplung sowie die nicht näher beschriebenen Gestängeteile der Schaltvorrichtung 10 können in bekannter Weise ausgeführt und angeordnet sein.

ln der gezeichneten Anordnung ist die Schaltgabel 30 in der Neutralstellung; d.h., es ist kein Gang eingelegt. Der Leerweg s ist dementsprechend durch die Vorspannung der Schraubendruckfeder 38 überbrückt.

Wird jetzt über den Schalthebel 12 über das Gestänge 16, 18 und die Schallwelle 20 mit dem Schaltfinger 22 der Gang geschaltet, wobei die Schaltschiene 26 über das Kulissenteil 24 entsprechend auf der Zeichnung nach links verschoben wird, so steigt zunächst die aufgebrachte Schaltkraft an, bis sie den Wert der Vorspannkraft der Schraubendruckfeder 38 erreicht.

Dann wird der Leerweg s kurzgeschlossen und bildet somit quasi einen Kraftspeicher, der im Moment des Nachlassens der Schaltkraft die Schaltgabel 30 in Schaftrichtung verzögerungsfrei nachführt und somit den Schaltvorgang zügig durch vollständiges Schließen der Synchronkupplung und ohne auftretendes Kratzgeräusch beendet.

Für die Bedienungsperson des Kraftfahrzeug ist dieser Vorgang aufgrund der geringen Wegunterschiede nicht bemerkbar. Ferner wird die Schaltpräzision bei richtiger Einstellung der Vorspannkraft der Schraubendruckfeder 38 nicht beeinträchtigt. Beim Herausnehmen des Ganges in umgekehrter axialer Richtung ist der Leerweg s wirkungslos.

Anstelle einer einseitigen axialen Betätigung der Schaltgabel 30 könnte diese auch in beiden Richtungen zum Einlegen jeweils eines Ganges betätigt werden, sofern die erwähnte Synchronkupplung in bekannter Weise als eine Doppelkupplung ausgeführt ist.

Dazu könnte in dem Nabenabschnitt 32 das Langloch 34 den zweifachen Leerweg s aufweisen und es könnte an der gegenüberliegenden Stirnseite des Nabenabschnittes 32 eine weitere Schraubendruckfeder 38 angeordnet sein, die ebenfalls über einen Anschlagring 40 abzustützen wäre.

Die beiden Schraubendruckfedern 38 würden dann bei gleicher Vorspannung den Nabenabschnitt 32 in der Neutralstellung der Schaltgabel 30 in einer Mittelposition bezüglich des Langloches 34 relativ zum Mitnehmerbolzen 36 halten, wodurch der besagte Kraftspeicher in beiden Schaltrichtungen über den jeweils halben Leerweg s vorläge.

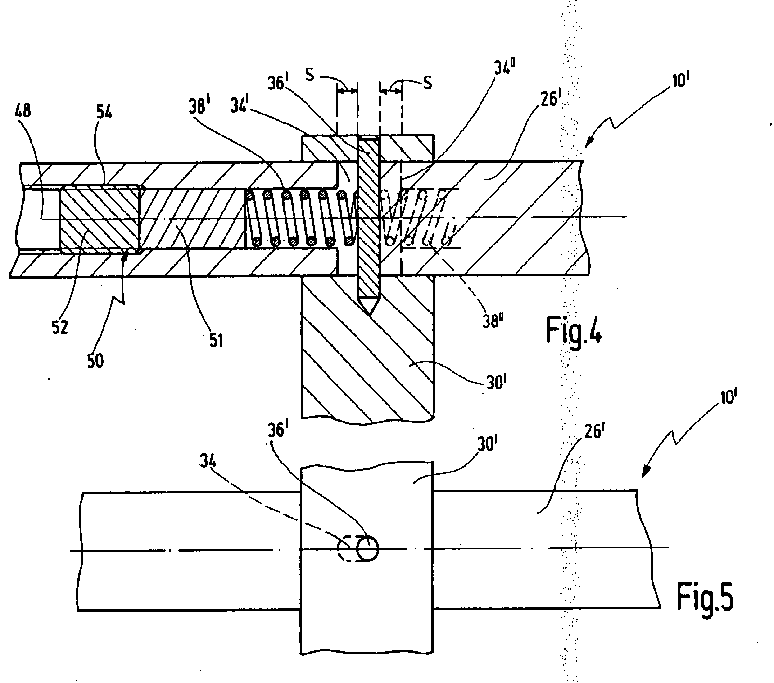

In Figuren 4 und 5 ist eine alternative Ausführungsform der erfindungsgemäßen Schaltvorrichtung generell mit 10' bezeichnet.

Der grundlegende Aufbau und die grundlegende Funktionsweise der Schaltvorrichtung 10' entsprechen jener der Schaltvorrichtung 10 der Figuren 1 bis 3. Im Folgenden wird daher lediglich auf Unterschiede dieser Schaltvorrichtungen eingegangen.

Die Schaltvorrichtung 10' weist eine Schaltschiene (oder Schaltstange) 26' auf, die mit einer Axialbohrung 48 versehen ist.

An dem Ende der Axialbohrung 48 ist die Schaltschiene 26' mit einem radial durchgehenden, axial ausgerichteten Langloch 34' versehen. Das Langloch 34' der Schaltschiene 26' wird von einem Mitnehmerbolzen 36' durchsetzt, der gegenüber dem Langloch 34' an beiden Enden vorsteht und starr mit einer Schaltgabel 30' verbunden ist.

Demzufolge lässt sich die Schaltgabel 30' axial begrenzt um einen Leerweg s gegenüber der Schaltschiene 26' bewegen.

In der Axialbohrung 48 sind eine Schraubendruckfeder 38' und eine Anschlaganordnung 50 angeordnet. Die Schraubendruckfeder 38' stützt sich einerseits an dem Mitnehmerbolzen 36' und an ihrem anderen Ende an Anschlaganordnung 50 ab. Auf diese Weise lässt sich die Schaltgabel 30' in Bezug auf die Schaltschiene 26' vorspannen. Die Schaltgabel 30 ist jedoch nicht zwangsläufig vorgespannt.

Die Anschlaganordnung 50 weist ein Anschlagelement 52 in Form eines Gewindestiftes und ein Verlängerungselement 51 in Form eines zylindrischen Elementes auf.

Das Anschlagelement 52 in Form des Gewindestiftes ist in einen Innengewindeabschnitt 54 der Axialbohrung 48 eingeschraubt.

Das Verlängerungselement 51 dient dazu, einen Axialweg von dem Innengewindeabschnitt 54 hin zu der Schraubendruckfeder 38' zu überbrücken. Hierdurch ist es möglich, eine vergleichsweise kurze Schraubendruckfeder 38' mit geeigneter Federkonstante und Länge auszuwählen, auch dann, wenn der Innengewindeabschnitt 54 in axialer Richtung relativ weit von dem Langloch 34' entfernt angeordnet ist. Auch kann durch das Verlängerungselement 51 erreicht werden, dass sich die Feder 38' nicht am Innengewindeabschnitt 54 verhakt.

Ferner versteht sich, dass das Anschlagelement 52 und das Verlängerungselement 51 auch einstückig ausgebildet sein können, so dass die Anschlaganordnung 50 einstückig ausgebildet ist.

Das Verlängerungselement 51 ist bei manchen Anwendungen nicht notwendig.

Durch Verdrehen des Anschlagelementes 52 innerhalb des Innengewindeabschnitts 54 lässt sich die Federkraft auf einfache Weise einjustieren, indem über das offene Ende der Axialbohrung 48 ein Werkzeug zum Verdrehen des Anschlagelements 52 angesetzt wird.

Alternativ ist es jedoch auch möglich, dass die Anschlaganordnung 50 durch einen genormten Zylinderstift oder einen Spannstift gebildet ist. Bei diesem ist die Justierung etwas aufwendiger. Die Funktionsweise ist jedoch die gleiche. Auch kann ein solcher Spannstift gemeinsam mit einem Verlängerungselement verwendet werden.

Die Funktionsweise der Schaltvorrichtung 10' entspricht jener der Schaltvorrichtung 10 der Figuren 1 bis 3. Vorteilhaft ist bei der Schaltvorrichtung 10', dass die Schraubenfeder 38' im Inneren der Schaltschiene 26' aufgenommen ist und insofern nicht so leicht verschmutzen kann.

Bei 34" ist gezeigt, dass es auch möglich ist, das Langloch mit einer solchen Länge einzurichten, dass die Schaltgabel 30' sich in Bezug auf die Schaltschiene 26' ausgehend von einer Mittelstellung in beiden Richtungen um den Leerweg s versetzen lässt. In diesem Fall wäre eine Anordnung aus einer weiteren Schraubendruckfeder 38'' und einer nicht dargestellten Anschlaganordnung 50 auf der gegenüberliegenden Seite des Mitnehmerbolzens 36' angeordnet.

Bei dieser alternativen Ausgestaltung lässt sich die Schaltvorrichtung 10' in Verbindung mit einer Schaltmuffe verwenden, bei der die Schaltgabel 30' eine Doppelkupplung bedient.

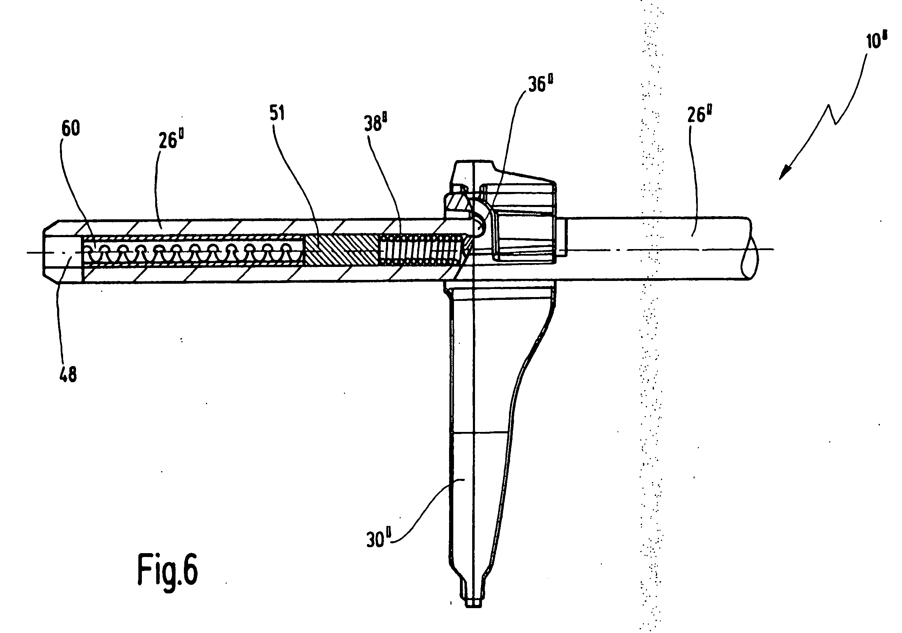

In Fig. 6 ist eine weitere alternative Ausführungsform einer erfindungsgemäßen Schaltvorrichtung generell mit 10'' bezeichnet.

Die Schaltvorrichtung 10'' entspricht in ihrem generellen Aufbau und ihrer generellen Funktionsweise generell der Schaltvorrichtung 10' der Figuren 4 und 5.

Als Anschlaganordnung 50 ist in diesem Fall ein Spannstift 60 in der Axialbohrung 48 vorgesehen.

## Patentansprüche

1. Schaltvorrichtung (10) für Geschwindigkeits-Wechselgetriebe, insbesondere in Kraftfahrzeugen, mit einem Betätigunsgestänge (16-26) zwischen einem manuell betätigbaren Schalthebel (12) und einer Schaltgabel (30), die mit der Kupplungsmuffe einer Synchronkupplung zum Schalten von Gängen in Eingriff ist, wobei die Kupplungsmuffe von einer Neutralstellung in zumindest einer Richtung axial verschiebbar in zumindest eine Gangstellung bringbar ist, wobei in dem Betätigungsgestänge (16-26) ein definiert begrenzter Leerweg (s) vorgesehen ist, der mittels zumindest einer Feder (38) überbrückt ist, wobei die Vorspannkraft der Feder (38) kleiner als die auftretende Schaltkraft ist, wobei die Schaltgabel (30) auf einer Schaltschiene (26) als Teil des Betätigungsgestänges (16-26) angeordnet ist, **dadurch gekennzeichnet, dass** die Feder (38) eine um die Schaltschiene (26) herum angeordnete Schraubendruckfeder (38) ist, die an einem Nabenabschnitt (32) der Schaltgabel (30) einerseits und an einem an der Schaltschiene (26) festgelegten Anschlagring (40) andererseits abgestützt ist.

2. Schaltvorrichtung nach Anspruch 1, **dadurch gekennzeichnet, dass** der Leerweg (s) und die Feder (38) zwischen der Schaltgabel (30) und dem diese beaufschlagenden Gestängeteil (26) angeordnet sind.

3. Schaltvorrichtung nach Anspruch 1 oder 2, **dadurch gekennzeichnet, dass** der Leerweg (s) durch ein Langloch (34) in einem Nabenabschnitt (32) der Schaltgabel (30) gebildet ist und dass ein Mitnehmerbolzen (36) der Schaltschiene (26) in das Langloch (34) einragt.

4. Schaltvorrichtung nach einem der Ansprüche 1 bis 3, **dadurch gekennzeichnet, dass** der Anschlagring (40) zur Einstellung der Vorspannkraft der Feder (38) auf der Schaltschiene (26) axial verstellbar ist.

5. Schaltvorrichtung nach Anspruch 4, **dadurch gekennzeichnet, dass** der Anschlagring (40) als Gewindemutter auf einen Gewindeabschnitt (42) auf der Schaltschiene (26) aufschraubbar ist.

6. Schaltvorrichtung nach einem oder mehreren der vorhergehenden Ansprüche, **dadurch gekennzeichnet, dass** bei einer in beiden Richtungen aus der Neutralstellung verschiebbaren Schaltmuffe ein in beiden Richtungen wirksamer Leerweg (2 x s) vorgesehen ist, der mittels zweier Federn (38) in eine definierte Mittelstellung einrichtbar ist, wobei die Vorspannkraft der Federn (38) jeweils kleiner als die jeweilige Schaltkraft ist.

7. Schaltvorrichtung nach Anspruch 6, **dadurch gekennzeichnet, dass** der Leerweg (2 x s) durch ein Langloch (34) in einem Nabenabschnitt (32) der Schaltgabel (30) gebildet ist, in das ein Mitnehmerbolzen (36) einer Schaltschiene (26) einragt, und dass beiderseits des Nabenabschnittes (32) je eine Schraubendruckfeder (38) vorgesehen ist, welche Federn (38) sich an je einem Anschlagring (40) auf der Schaltschiene (26) abstützen und die Schaltgabel (30) bezüglich des Leerweges (s) in die Mittelstellung vorspannen.

8. Schaltvorrichtung nach einem oder mehreren der vorhergehenden Ansprüche, **dadurch gekennzeichnet, dass** der definierte Leerweg (s) ca. 1/3 des jeweiligen Schaltweges der Schaltgabel (30) beträgt.

9. Schaltvorrichtung nach einem oder mehreren der vorhergehenden Ansprüche, **dadurch gekennzeichnet, dass** die Vorspannkraft der Federn (38) ca. 30 % bis 70 %, insbesondere ca. 50 %, der regulären Schaltkraft beträgt.

10. schaltvorrichtung nach Anspruch 1 oder 2 oder einem der Ansprüche 6 bis 9, **dadurch gekennzeichnet, dass** der Leerweg (s) durch ein Langloch (34') in der Schaltschiene (26') gebildet ist, in das ein Mitnehmerbolzen (36') der Schaltgabel (30') hineinragt.

11. Schaltvorrichtung nach Anspruch 10, **dadurch gekennzeichnet, dass** die Feder (38') in einer Axialbohrung (48) der Schaltschiene (26') aufgenommen ist und sich einerseits an dem Mitnehmerbolzen (36') und andererseits an einer Anschlaganordnung (50) innerhalb der Axialbohrung (48) abstützt.

12. Schaltvorrichtung nach Anspruch 11, **dadurch gekennzeichnet, dass** die Anschlaganordnung (50) ein Anschlagelement (52), das innerhalb der Axialbohrung (48) axial festgelegt ist, und ggf. ein Verlängerungselement (51) aufweist, das zwischen dem Anschlagelement (52) und der Feder (38') angeordnet ist.

13. Schaltvorrichtung nach Anspruch 11 oder 12, **dadurch gekennzeichnet, dass** die Anschlaganordnung (50) einen fest in der Axialbohrung verspannten Zylinderstift (60) aufweist.

14. Schaltvorrichtung nach Anspruch 11 oder 12, **dadurch gekennzeichnet, dass** die Anschlaganordnung (50) einen verstellbar in der Axialbohrung (48) aufgenommenen Gewindestift (52) aufweist.

## Claims

1. Shifting device for a change-speed transmission, in particular for a motor vehicle, having an operating linkage (16 - 26) arranged between a manually operable gear lever (12) and a shift fork (30), which is engaged with the coupling sleeve of a synchronous clutch for shifting gears, wherein the coupling sleeve is movable from a neutral position in at least one axial direction into at least one gear position, wherein a defined limited empty run (s), which is bypassed by means of at least one spring (38), is provided in the operating linkage (16 - 26), wherein the preload force of the spring (38) is smaller than the occurring shift force, wherein the shift fork (30) is arranged on a shift rail (26) being par of the operating linkage (16 - 26), **characterized in that** the spring (38) is a helical compression spring, which is arranged around the shift rail (26) and which is supported on one side at a hub section (32) of the shift fork (30) and on the other side at a stop ring (40), which is fixed to the shift rail (26).

2. Shifting device according to claim 1, **characterized in that** the empty run (s) and the spring (38) are arranged between the shift fork (30) and the linkage portion (26) impinging the shift fork.

3. Shifting device according to claim 1 or 2, **characterized in that** the empty run (s) is formed by a long hole (34) in a hub section (32) of the shift fork (30) and that a tappet bolt (36) of the shift rail (26) extends into the long hole (34).

4. Shifting device according to any of claims 1 to 3, **characterized in that** the stop ring (40) is axially adjustable on the shift rail (26) to adjust the preload force of the spring (38).

5. Shifting device according to claim 4, **characterized in that** the stop ring (40), which is formed by a threaded nut, is screwable onto a threaded portion (42) of the shift rail (26).

6. Shifting device according to one or more of the previous claims, **characterized in that** in a shifting sleeve, which is movable from the neutral position in both directions, an empty run (2 x s) is provided, which is effective in both directions and which can be set up in a defined middle position by means of two springs (38), wherein the preload force of the springs (38) is smaller than the respective shifting force.

7. Shifting device according to claim 6, **characterized in that** the empty run (2 x s) is formed by a long hole (34) in a hub section (32) of the shift fork (30), wherein a tappet bolt (36) of a shift rail (26) extends into the long hole (34), and that a helical compression spring (38) is provided at each side of the hub section (32), wherein the springs (38) are each supported at a stop ring (40) on the shift rail (26) and preload the shift fork (30) in the middle position with respect to the empty run (s).

8. Shifting device according to one or more of the previous claims, **characterized in that** the defined empty run (s) is approximately 1/3 of the respective shifting travel of the shift fork (30).

9. Shifting device according to one or more of the previous claims, **characterized in that** the preload force of the springs (38) is approximately 30 % to 70 %, in particular approximately 50 % of the normal shifting force.

10. Shifting device according to claim 1 or 2 or one of the claims 6 to 9, **characterized in that** the empty run (s) is formed by a long hole (34') in the shift rail (26'), wherein a tappet bolt (36') of the shift fork (30') extends into the long hole (34').

11. Shifting device according to claim 10, **characterized in that** the spring (38') is received in an axial bore (48) of the shift rail (26') and supported on one side at the tappet bolt (36') and on the other side at a stop assembly (50) within the axial bore (48).

12. Shifting device according to claim 11, **characterized in that** the stop assembly (50) is a stop element (52), which is fixed axially within the axial bore (48) and, if necessary, comprises an enlargement element (51), which is formed between the stop element (52) and the spring (38').

13. Shifting device according to claim 11 or 12, **characterized in that** the stop assembly (50) has a cylinder pin (60), which is braced within the axial bore.

14. Shifting device according to claim 11 or 12, **characterized in that** the stop assembly (50) has an adjustable threaded pin, which is received in the axial bore (48).

## Revendications

1. Dispositif de changement de vitesse (10) pour boîte de vitesses, en particulier sur des véhicules automobiles, comprenant une tringle de commande (16-26) entre un levier de changement de vitesse (12) pouvant être commandé manuellement et une fourchette de changement de vitesse (30), qui est en prise avec le manchon d'accouplement d'un accouplement synchrone pour le changement de vitesses, le manchon d'accouplement pouvant être amené d'une position neutre dans au moins une direction de façon coulissante axialement dans au moins une position de vitesse, une course à vide (s) limitée de façon définie étant prévue dans la tringle de commande (16-26), laquelle course est surmontée au moyen d'au moins un ressort (38), la force de prétension du ressort (38) étant inférieure à la force de changement de vitesse qui apparaît, la fourchette de changement de vitesse (30) étant disposée sur une tige de commande des fourchettes (26) comme partie de la tringle de commande (16-26), **caractérisé en ce que** le ressort (38) est un ressort de pression hélicoïdal (38) disposé autour de la tige de commande des fourchettes (26), lequel ressort est soutenu sur une partie du moyeu (32) de la fourchette de changement de vitesse (30) d'une part et sur une bague de butée (40) fixée sur la tige de commande des fourchettes (26) d'autre part.

2. Dispositif de changement de vitesse selon la revendication 1, **caractérisé en ce que** la course à vide (s) et le ressort (38) sont disposés entre la fourcheette de changement de vitesse (30) et la partie de tringle (26) sollicitant cette fourche.

3. Dispositif de changement de vitesse selon la revendication 1 ou 2, **caractérisé en ce que** la course à vide (s) est formée par un trou oblong (34) dans une partie de moyeu (32) de la fourchette de changement de vitesse (30) et **en ce qu'**un boulon entraîneur (36) de la tige de commande des fourchettes (26) s'engage dans le trou oblong (34).

4. Dispositif de changement de vitesse selon l'une quelconque des revendications 1 à 3, **caractérisé en ce que** la bague de butée (40) peut être déplacée axialement sur la tige de commande des fourchettes (26) pour le réglage de la force de prétension du ressort (38).

5. Dispositif de changement de vitesse selon la revendication 4, **caractérisé en ce que** la bague de butée (40) peut être vissée en tant qu'écrou fileté sur une partie de filetage (42) sur la tige de commande des fourchettes (26).

6. Dispositif de changement de vitesse selon l'une quelconque ou plusieurs des revendications précédentes, **caractérisé en que**, sur un manchon de changement de vitesse pouvant coulisser dans les deux directions à partir de la position neutre, il est prévu une course à vide (2 x s) efficace dans les deux directions, qui peut être réglée au moyen de deux ressorts (38) dans une position centrale définie, la force de prétension des ressorts (38) étant respectivement inférieure à la force de changement de vitesse respective.

7. Dispositif de changement de vitesse selon la revendication 6, **caractérisé en ce que** la course à vide (2 x s) est formée par un trou oblong (34) dans une partie de moyeu (32) de la fourchette de changement de vitesse (30), trou dans lequel s'engage un boulon entraîneur (36) d'une tige de commande des fourchettes (26), et **en ce qu'**il est prévu sur chacun des deux côtés de la partie de moyeu (32) un ressort de pression hélicoïdal (38), lesquels ressorts (38) s'appuient chacun sur une bague de butée (40) sur la tige de commande des fourchettes (26) et prétendent la fourchette de changement de vitesse (30) par rapport à la course à vide (s) dans la position centrale.

8. Dispositif de changement de vitesse selon l'une quelconque ou plusieurs des revendications précédentes, **caractérisé en ce que** la course à vide (s) définie représente environ 1/3 de la course de changement de vitesse respective de la fourchette de changement de vitesse (30).

9. Dispositif de changement de vitesse selon l'une quelconque ou plusieurs des revendications précédentes, **caractérisé en ce que** la force de prétension des ressorts (38) représente environ 30 % à 70 %, en particulier environ 50 %, de la force de changement de vitesse régulière,

10. Dispositif de changement de vitesse selon la revendication 1 ou 2 ou l'une quelconque des revendications 6 à 9, **caractérisé en ce que** la course à vide (s) est formée par un trou oblong (34') dans la tige de commande des fourchettes (26'), trou dans lequel s'engage un boulon entraîneur (36') de la fourchette de changement de vitesse (30').

11. Dispositif de changement de vitesse selon la revendication 10, **caractérisé en ce que** le ressort (38') est réceptionné dans un perçage axial (48) de la tige de commande des fourchettes (26') et s'appuie d'une part sur le boulon entraîneur (36') et d'autre part sur un agencement de butée (50) à l'intérieur du perçage axial (48).

12. Dispositif de changement de vitesse selon la revendication 11, **caractérisé en ce que** l'agencement de butée (50) présente un élément de butée (52), qui est fixé axialement à l'intérieur du perçage axial (48), et éventuellement un élément de rallonge (51), qui est disposé entre l'élément de butée (52) et le ressort (38').

13. Dispositif de changement de vitesse selon la revendication 11 ou 12, **caractérisé en ce que** l'agencement de butée (50) présente une goupille cylindrique (60) prétendue de façon fixe dans le perçage axial.

14. Dispositif de changement de vitesse selon la revendication 11 ou 12, **caractérisé en ce que** l'agencement de butée (50) présente une tige filetée (52) réceptionnée de façon réglable dans le perçage axial (48).
